# EUROPEAN PATENT APPLICATION

(11) **EP 1 895 699 A2**
(43) Date of publication of application: **05.03.2008**
(21) Application number: 07114322.6
(22) Date of filing: 14.08.2007
(51) Int. Cl.: H04L 1/00

(54) **Modulation scheme deciding apparatus, receiving apparatus, modulation scheme deciding method and modulation scheme deciding program**

(30) Priority: 28.08.2006 JP 2006231116
(71) Applicant: MATSUSHITA ELECTRIC INDUSTRIAL CO., LTD, Kadoma-shi, Osaka 571-8501 (JP)
(72) Inventor: Murao, Yukiteru, Osaka 540-6207 (JP)
(74) Representative: Zimmer, Franz-Josef

(57) **Abstract**

A modulation scheme deciding apparatus, a receiving apparatus, a modulation scheme deciding method and modulation scheme deciding program can improve a performance of the frame modulation scheme decision without the influence of an error in the modulation scheme decision in each burst and improve throughput of the receiving apparatus. Receiver (100) has modulation scheme deciding apparatus (106), the modulation scheme deciding apparatus (106) including: received quality measuring apparatus (101) that measures received qualities of received data transmitted from a plurality of bursts separated from one frame; frame modulation scheme deciding apparatus (102) that decides a modulation scheme of frame based on received qualities of a plurality of modulation schemes measured in each burst; and burst modulation scheme deciding apparatus (103) that decides the modulation scheme of each burst based on the received quality of received data. Frame modulation scheme modulating apparatus (102) decides a frame modulation scheme such that the received quality of the frame is the highest overall.

## Description

### BACKGROUND OF THE INVENTION

### 1. Field of the Invention

The present invention relates to a modulation scheme deciding apparatus, a receiving apparatus, a modulation scheme deciding method and modulation scheme deciding program in a radio communication. More particularly, the present invention relates to a modulation scheme deciding apparatus and a modulation scheme deciding method used for a receiver in a communication system that executes communication by switching a plurality of modulation schemes.

### 2. Description of the Related Art

The EDGE (Enhanced Data GSM Environment) communication scheme adopts two different modulation schemes (GMSK and 8PSK). A receiver cannot identify which modulation scheme is used to transmit a signal from a transmitter, and, the receiver has to identify the modulation scheme. Further, a feature of the EDGE communication scheme is that a transmitter executes a transmission by dividing one frame into four bursts. A receiver decides the modulation scheme in each of four bursts, and according to these results of decision, the receiver decides the overall frame modulation scheme. In the prior art, the modulation scheme is decided taking a majority vote of the modulation schemes of four bursts.

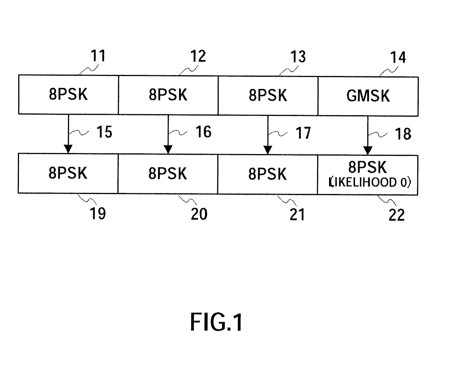

FIG.1 illustrates an example of a frame modulation scheme decision. A base station executes a transmission by dividing a frame into four bursts.

As shown in FIG.1, a receiver decides modulation schemes in four bursts. In this case, the four bursts refer to demodulated first received burst data 11, demodulated second received burst data 12, demodulated third received burst data 13, and demodulated fourth received burst data.

In the example of decision in FIG. 1, the receiver decides that the modulation scheme of first burst data 11 to third burst data 13 is the 8PSK modulation schemes and the modulation scheme of fourth burst data 14 as GMSK modulation scheme, and, according to these results of decision, the receiver decides the 8PSK modulation scheme as the frame modulation scheme. According to the decided modulation scheme, the receiver executes a conversion processing (see reference numerals 15 to 18 in FIG. 1) for modulated first to fourth received burst data 11 to 14. The converted data refers to first received burst data 19 to fourth received burst data 22.

In the prior art, a majority vote is employed and the decided frame modulation scheme in the example is the 8PSK modulation scheme, despite the received quality measured in individual bursts.

In a receiving system that decides the frame modulation scheme of TDMA (Time Division Multiple Access) communication scheme adopted for, for example, GSM (Global System for Mobile communication) communication, when a frame is received in a plurality of bursts (for example, four bursts in the case of GSM) by time division, the frame modulation scheme is decided taking a majority vote of the modulation schemes decided in a plurality of bursts dividing a frame (for example, see patent document 1: US Patent Application No. 6400928 B1). Further, in the prior art, when a majority vote does not work (in the case of deciding a modulation scheme using an even number of bursts), the modulation scheme is decided using the received quality of individual bursts.

Further, GSM (EDGE), which is a TDMA communication scheme, receives four bursts by time division, and a receiver has to decide the modulation scheme of each burst in real time and execute demodulation. As a result, there may be demodulation results in a frame where a wrong modulation scheme is decided.

Further, in the deciding method taking a majority vote of the prior art, more errors occur in the frame modulation scheme decision. For example, when the modulation schemes in four bursts are decided to be the GMSK modulation scheme, GMSK modulation scheme, 8PSK modulation scheme and GMSK modulation scheme, the modulation scheme of the frame is decided to be the GMSK modulation scheme whether or not the received quality of individual bursts is high.

Further, with a deciding apparatus, which decides the frame modulation scheme by taking a majority vote of the modulation schemes of bursts, there may be an error in the frame modulation scheme decision. For example, in the case of FIG. 1, the receiver decides the frame modulation scheme as the 8PSK modulation scheme taking a majority vote. However, when received quality is poor and a majority vote is taken, the majority vote is less reliable and the modulation scheme decision may be wrong. Once the modulation scheme is wrong, it is impossible to execute demodulation and the degrading of communication throughput is caused by, for example, retransmission requests.

In GSM (EDGE) using HARQ (Hybrid Automatic Repeat reQuest system), this frame modulation scheme decision is quite important for receiving performance because frames received earlier and frames received present are combined. When received data demodulated in the wrong modulation scheme are combined by HARQ, a correct result is hardly obtained. Therefore, a receiving apparatus, which can decide a modulation scheme correctly, improves not only the performance of the receiver but also the overall efficiency of the communication system including the receiving apparatus.

### SUMMARY OF THE INVENTION

An object of the present invention is to provide a modulation scheme deciding apparatus, a receiving apparatus, a modulation scheme deciding method and modulation scheme deciding program that can improve the performance of frame modulation scheme decision without the influence of an error in modulation scheme decision in individual bursts and improve the throughput of the receiving apparatus.

According to an aspect of the present invention, a modulation scheme deciding apparatus includes: a received quality measuring section that measures received quality of received data, the data being transmitted in a plurality of bursts dividing a frame and being subjected to the received quality measurement on a per burst basis; a frame modulation scheme deciding section that decides a modulation scheme of the frame based on received quality of a plurality of modulation schemes measured in each burst; and a burst modulation scheme deciding section that decides a modulation scheme of each burst based on the received quality of the received data.

According to an aspect of the present invention, a receiving apparatus includes: a received quality measuring section that measures received quality of received data, the data being transmitted in a plurality of bursts dividing a frame and being subjected to the received quality measurement on a per burst basis; a frame modulation scheme deciding section that decides a modulation scheme of the frame based on received quality of a plurality of modulation schemes measured in each burst; and a burst modulation scheme deciding section that decides a modulation scheme of each burst based on the received quality of the received data; a demodulating section that demodulates the received data based on the modulation scheme decided in the burst modulation scheme deciding section; and a channel decoding section that executes channel decoding based on the modulation scheme of the frame decided in the frame modulation scheme deciding section.

According to another aspect of the present invention, a modulation scheme deciding method includes the steps of: measuring received quality of received data, the data being transmitted in a plurality of bursts dividing a frame and being subjected to the received quality measurement on a per burst basis; deciding a modulation scheme of the frame based on received quality of a plurality of modulation schemes measured in each burst; and deciding a modulation scheme of each burst based on the received quality of the received data.

### BRIEF DESCRIPTION OF THE DRAWINGS

FIG.1 illustrates an example of the frame modulation scheme decision of the prior art;
FIG.2 is a block diagram showing the configuration of a receiver having a modulation scheme deciding apparatus according to Embodiment 1 of the present invention;
FIG.3 illustrates a transmission format of GSM system for a receiver having the modulation scheme deciding apparatus according to Embodiment 1;
FIG.4 illustrates an example of processing of channel decoding apparatus of a receiver having a modulation scheme deciding apparatus according to Embodiment 1;
FIG.5 illustrates frame modulation scheme decision from a receiver having a modulation scheme deciding apparatus according to Embodiment 1;
FIG.6 is a flow chart showing a frame modulation scheme deciding method of a modulation scheme deciding apparatus according to Embodiment 1;
FIG.7 illustrates an example of a result of frame modulation scheme decision from a modulation scheme deciding apparatus according to Embodiment 1;
FIG.8 is a flowchart showing a frame modulation scheme deciding method of a modulation scheme deciding apparatus according to Embodiment 2 of the present invention;
FIG.9 illustrates an example of a result of frame modulation scheme decision from modulation scheme deciding apparatus according to Embodiment 2;
FIG.10 is a block diagram showing s configuration of a receiver having a modulation scheme deciding apparatus according to Embodiment 3 of the present invention;
FIG.11 is a block diagram showing a configuration of a receiver having a modulation scheme deciding apparatus according to Embodiment 4 of the present invention.

### DESCRIPTION OF THE PREFERRED EMBODIMENTS

Hereinafter, embodiments of the present invention will be explained in detail with reference to the attached drawings.

### (Embodiment 1)

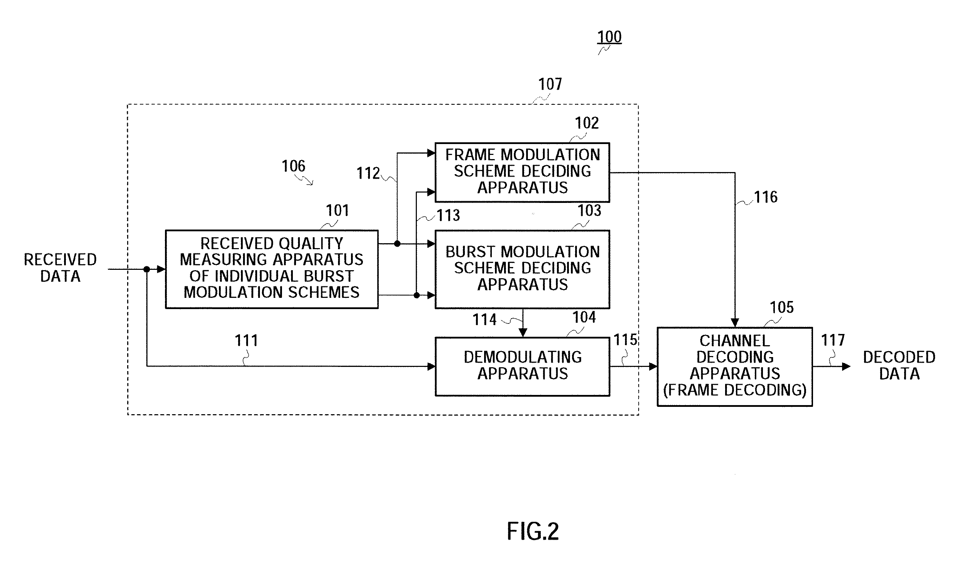

FIG. 2 is a block diagram illustrating a configuration of a receiver having a modulation scheme deciding apparatus according to Embodiment 1 of the present invention. To be more specific, the block diagram illustrates an example of the configuration of a decoding apparatus including a frame demodulating apparatus having a modulation scheme deciding apparatus. In the present embodiment, a receiver for the digital mobile communication system of the EDGE communication scheme is adopted as an example.

In FIG.2, receiver 100 having a modulation scheme deciding apparatus includes: received quality measuring apparatus 101 that measures the received quality of received data, the data being transmitted in a plurality of bursts dividing a frame and being subjected to the received quality measurement on a per burst basis; frame modulation scheme deciding apparatus 102 that decides frame modulation scheme based on the received quality of a plurality of modulation schemes measured in individual bursts; burst modulation scheme deciding apparatus 103 that decides the modulation scheme of each burst based on received quality of received data; demodulating apparatus 104 that demodulates received data using the modulation scheme decided by burst modulation scheme deciding apparatus 103; and channel decoding apparatus 105 that executes channel decoding including error correction and error check, using the frame modulation scheme decided by frame modulation scheme deciding apparatus 102.

The above received quality measuring apparatus 101, frame modulation scheme deciding apparatus 102 and burst modulation scheme deciding apparatus 103 configure modulation scheme deciding apparatus 106. Further, modulation scheme deciding apparatus 106 and demodulating apparatus 104 configure frame demodulating apparatus 107 as a whole.

Received data 111 is inputted to received quality measuring apparatus 101 and demodulating apparatus 104 for the received quality of each burst modulation scheme. Received quality measuring apparatus 101 measures the received quality of each modulation scheme of bursts, and outputs received quality signal 112 in the first demodulation scheme and received quality signal 113 in the second demodulation scheme to frame modulation scheme deciding apparatus 102 and burst modulation scheme deciding apparatus 103, respectively. Modulation scheme identifying signal 114 decided by burst modulation scheme deciding apparatus 103 is inputted to demodulating apparatus 104. Further, data 115 demodulated in demodulating apparatus 104 is inputted to channel decoding apparatus 105. Further, frame modulation scheme identifying signal 116 decided by frame modulation scheme deciding apparatus 102 is inputted to channel decoding apparatus 105. Channel decoding apparatus 105 decodes demodulated data 115 demodulated in frame modulation scheme identifying apparatus 116, and outputs decoded data 117 after decoding the frame.

Received quality measuring apparatus 101 measures the received quality of each modulation scheme of bursts. In this case, received quality is measured from, for example, BER (Bit Error Rate), SNR (Signal to Noise Ratio) and an input power level at an antenna terminal. For example, received quality measuring apparatus 101 estimates the received quality of SNR from the known signal set by a transmission channel estimating section (in the case of GSM, the known signal called "training sequence code signal") and the known signal incorporated in received data. As another method of measuring received quality, received quality measuring apparatus 101 outputs a soft decision value (likelihood) calculated as received quality by an equalizing means. In this case, received quality measuring apparatus 101 employs a configuration where likelihood of demodulated data is inputted from demodulating apparatus 104 to calculate the absolute value of likelihood from demodulated data.

Frame modulation scheme deciding apparatus 102 decides the frame modulation scheme from a plurality of received quality of a plurality of bursts (four bursts in the case of GSM). More specifically, frame modulation scheme deciding apparatus 102 decides the frame modulation scheme based on the received quality of the plurality of modulation schemes measured in individual bursts such that the overall received quality of frame is the highest.

Further, in frame modulation scheme deciding apparatus 102, frame modulation scheme decision changes slightly according to the kind of received quality measured by received quality deciding apparatus 101. In each modulation scheme, frame modulation scheme deciding apparatus 102 basically adds the received quality of a plurality of bursts configuring the frame and decides the modulation scheme of the frame according to the overall received quality. For example, (1) when received quality measuring apparatus 101 outputs soft decision values (likelihood) as the received quality based on received quality signals 112 and 113, frame modulation scheme deciding apparatus 102 sums up the absolute values of these soft decision values and decides the modulation scheme with the higher total value as the frame modulation scheme. Further, (2) when received quality measuring apparatus 101 outputs SNR estimated by each modulation scheme in a plurality of bursts as the received quality of each modulation scheme, frame modulation scheme deciding apparatus 102 compares sums of SNR in each modulation scheme and decides the modulation scheme with the higher total value as the frame modulation scheme. When a frame modulation scheme is decided based on the received quality decided in the above (1) or (2), it is possible to decide a frame modulation scheme selecting only received quality of the modulation scheme selected more accurately and easily by employing the following techniques (3) and (4). That is, (3) frame modulation scheme deciding apparatus 102 replaces the received quality of the unselected modulation scheme by 0 and calculates a sum.

Frame modulation scheme deciding apparatus 102 adds only SNR estimated the higher value of each modulation scheme of bursts and estimates the total value in each modulation scheme.

Burst modulation scheme deciding apparatus 103 compares the received quality of each burst obtained from received quality measuring apparatus 101 with a plurality of modulation schemes (in the case of GSM, two modulations, that is, GMSK modulation and 8 PSK modulation), and decides the modulation scheme with the higher received quality as the burst modulation scheme. The method of measuring received quality of received data is similar to the measuring method of frame modulation scheme deciding apparatus 102

Hereinafter, the modulation scheme deciding operation of receiver 100 having modulation scheme deciding apparatus 106 having the above configuration will be explained.

First, the received quality measurement for each modulation scheme of bursts will be explained, followed by the explanation of overall operation of receiver 100 having frame demodulating apparatus 107.

Frame demodulating apparatus 107 measures the received quality of individual bursts in each modulation scheme of received data to decide the frame modulation scheme from a plurality of modulation schemes. For example, in the case of GSM, received quality measurement can measure received quality from known information called "training sequence" and received data. When there are three modulation schemes, received quality is managed per modulation scheme such as Q1(k), Q2(k) and Q3(k). Here, k is the burst number.

Further, frame demodulating apparatus 107 compares the received quality of each modulation scheme of bursts and decides the modulation scheme with the highest received quality as the burst modulation scheme. For example, in the case of Q1 (k)=11, Q2 (k)=20 and Q3 (k)=8, Q2(k) has the highest received quality and frame demodulating apparatus 107 decides the second modulation scheme as the frame scheme. In this example, frame demodulating apparatus 107 evaluates "high value of the received quality" as "high received quality".

Next, demodulating apparatus 104 demodulates received data in the modulation scheme decided in individual bursts.

A plurality of bursts configure a frame and the frame modulation scheme needs to be decided from the plurality of bursts. In the present embodiment, a frame modulation scheme is decided by the received quality measured in individual bursts. For example, if four bursts configure a frame, frame demodulating apparatus 107 calculates a sum of the received quality of each modulation scheme, like S1=Σ(Q1(k)), S2=Σ(Q2(k)) and S3=Σ(Q3(k)) K=0 to 3. Further, frame demodulating apparatus 107 decides the modulation scheme with the highest received quality from S1, S2 and S3 as the frame modulation scheme. As a method of measuring received quality, the sum of absolute values of likelihood is calculated from demodulated data. In the present embodiment, a modulation scheme is not decided taking a majority vote of the modulation schemes decided in individual bursts like the prior art. Therefore, when three of four bursts are decided the same modulation scheme and a sum of received quality is low, the modulation scheme may be decided a wrong modulation scheme.

Finally, channel decoding apparatus 105 decodes data from the decided frame modulation scheme and a plurality of demodulated received data.

Overall operation of receiver 100 having frame demodulating apparatus 107 will be explained.

### (Overall operation of receiver 100)

In channel decoding apparatus 105 having modulation scheme deciding apparatus 106 in FIG.2, received data 111 is inputted to received quality measuring apparatus 101 in response to the received quality of each modulation scheme of bursts. First, received quality measuring apparatus 101 measures the received quality of each modulation scheme of bursts.

The measured received quality is inputted to frame modulation scheme deciding apparatus 102 and burst modulation scheme deciding apparatus 103 as received quality signal 112 in the first demodulation scheme and received quality signal 113 in the second demodulation scheme. The modulation schemes for measuring received quality are, for example, one GMSK modulation scheme and two 8PSK modulation schemes (the number of measured modulation schemes may be more than three).

Burst modulation scheme deciding apparatus 103 compares the received quality of each modulation scheme of bursts, based on received quality signal 112 in the first demodulation scheme and received quality signal 113 in the second demodulation scheme. Burst modulation scheme deciding apparatus 103 decides the modulation scheme with the highest received quality as the modulation scheme for demodulation. Decided modulation scheme identifying signal 114 is outputted to demodulating apparatus 104.

Decided modulation scheme identifying signal 114 and received data 111 are inputted to demodulating apparatus 104, and demodulating apparatus 104 demodulates received data 111 according to the decided modulation scheme and outputs decoding data 115 in each burst to channel decoding apparatus 105.

By contrast, frame modulation scheme deciding apparatus 102 decides the frame modulation scheme from a plurality of received quality of a plurality of bursts (four bursts in the case of GSM). Decided frame modulation scheme identifying signal 116 is outputted to channel decoding apparatus 105.

Channel decoding apparatus 105 executes decoding (such as error correction and error check) using frame modulation scheme identifying signal 116 and demodulated data 115, and outputs decoded data 117.

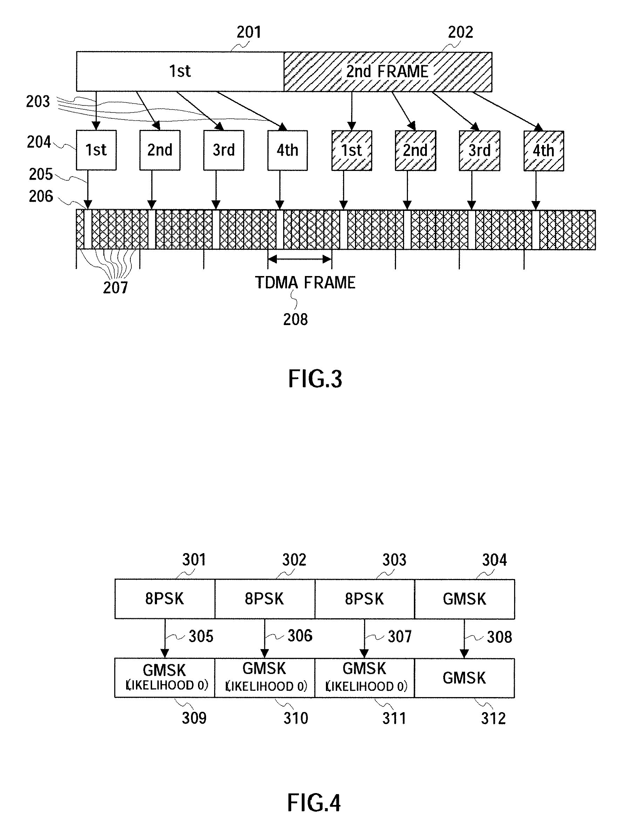

FIG.3 illustrates a transmission format of GSM system.

First, as shown in FIG.3, transmission data is decoded on a per frame basis and the decoded data are first frame data 201 and second frame data 202. First frame data 201 and second frame data 202 decoded on a per frame basis are divided into a plurality of bursts and the divided data are individual burst data 203 for radio transmission. Each frame is divided into four bursts in GSM system. Referring to first burst data 204 of individual burst data 203 divided for radio communication, transmission burst 205 passing radio channel is transmitted as received slot 206 received at terminals. There are received slots 207 for a plurality of users for one received slot 206 (see FIG.3). The operation of individual burst data 203 is the same operation described above.

In the GMSK modulation scheme, one TDMA frame 208 has eight slots. Received slot 206 received at terminals and received slots 207 for a plurality of users are mapped to TDMA 208 and are transmitted by a transmitter. In the GSM system, one TDMA frame has eight slots.

FIG.4 illustrates an eample of the process of channel decoding apparatus 105. Unlike the example of the prior frame modulation scheme decision of FIG.1, burst modulation scheme deciding apparatus 103 decides the correct modulation scheme and the channel decoding apparatus 105 decodes data 115 demodulated by demodulating apparatus 104 based on the decision of correct modulation scheme, using frame modulation scheme identifying signal 116 decided by frame modulation scheme deciding apparatus 102.

As shown in FIG.4, receiver 100 having a modulation scheme deciding apparatus decides the modulation scheme of demodulated first received burst data 301, demodulated second received burst data 302, demodulated third received burst data 303 and demodulated fourth received burst data 304. In this example, the modulation scheme is decided as 8PSK in three bursts and GMSK in one burst. Demodulated first received burst data 301 to fourth received burst data 304 are changed (see 305 to 308 of FIG.4) to changed first burst data 309 to fourth burst data 312 according to a decided modulation scheme.

In FIG.4, the modulation scheme is decided as 8PSK in three bursts and GMSK in one burst. Although the frame modulation scheme is decided as 8PSK according to the example of the prior art, in the present embodiment, a modulation scheme deciding apparatus decides GMSK as the frame modulation scheme by deciding the modulation scheme from the received quality of a plurality of bursts configuring the frame. That is, in the present embodiment, the modulation scheme deciding apparatus estimates the received quality of a plurality of bursts configuring the frame, and, when the received quality of a burst is the highest, the modulation scheme deciding apparatus decides the burst modulation scheme as the frame modulation scheme.

In the frame of FIG.4, the frame modulation scheme is assumed to be decided as GMSK, and conversion processing (see number 305 to 308) is executed on received data. Changed first received burst data 309 to fourth received burst data 312 are treated as GMSK data. When the burst modulation scheme and the frame modulation scheme are different, the modulation scheme deciding apparatus can improve receiving performance by replacing likelihood of the burst by 0. In this case, the frame modulation scheme is decided as GMSK and the likelihood of first received burst data 309 to third received burst data 311 decided as the 8PSK modulation scheme instead of the GMSK modulation scheme upon decision in individual bursts is replaced by 0. Further, decoding is possible without executing the processing that replaces likelihood by 0.

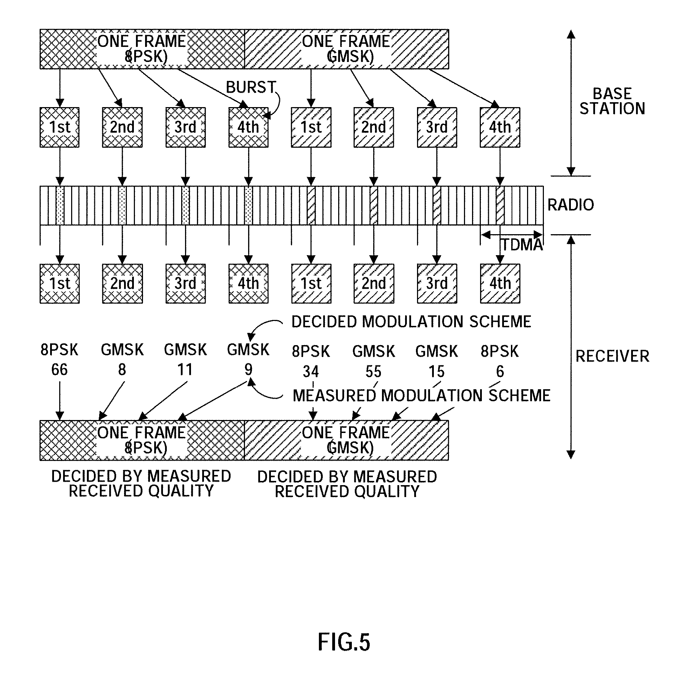

The above described frame modulation scheme decision will be explained in detail using FIG.5. (Frame Modulation scheme Decision)

FIG. 5 illustrates a decision of the frame modulation scheme of receiver 100 having modulation scheme deciding apparatus 106.

The EDGE communication scheme employs two different modulation schemes (GMSK and 8PSK). Receiver 100 cannot identify which modulation scheme is used to transmit a signal from a transmitter, and so receiver 100 has to identify a modulation scheme. Further, a feature of the EDGE communication scheme is that a base station executes a transmission by dividing a frame into four bursts.

As shown in FIG.5, a base station executes a transmission by dividing the first frame into four bursts by the 8PSK modulation scheme and the second frame into four bursts by the GMSK modulation scheme.

Receiver 100 receives received data 111 (FIG.2) transmitted from the base station and burst modulation scheme deciding apparatus 103 decides the modulation scheme of each burst. In the present embodiment, burst modulation scheme deciding apparatus 103 decides the modulation scheme of the bursts (1st, 2nd, 3rd, 4th) in the first frame and the bursts (1st, 2nd, 3rd, 4th) in the second frame as the 8PSK modulation scheme, the GMSK modulation scheme, the GMSK modulation scheme, the GMSK modulation scheme, the 8PSK modulation scheme, the GMSK modulation scheme, the GMSK modulation scheme and the 8PSK modulation scheme, respectively.

Further, received quality measuring apparatus 101 measures received quality Q of each modulation scheme of bursts from received data 111. In FIG.5, received quality measuring apparatus 101 measured "66", "8", "11", "9", "34", "55", "15" and "6" (the number is an absolute value of soft-decision value (likelihood) from 0 to 255 and the unit is scale) as the received quality of the above 8PSK modulation scheme, GMSK modulation scheme, GMSK modulation scheme, GMSK modulation scheme, 8PSK modulation scheme, GMSK modulation scheme, GMSK modulation scheme and 8PSK modulation scheme, respectively.

Additional explanation will be described. In the present embodiment, the received quality of GMSK and 8PSK of individual bursts are measured and the correlation between bursts is checked. The modulation scheme with the higher received quality is decided as the burst modulation scheme. The received quality of the modulation scheme is the received quality of the burst.

The present embodiment employs the modulation scheme with the higher received quality by combining the modulation scheme decided in individual bursts and the received quality Q(k)greater than 0(K=1,2,3,4) of individual bursts. For example, when modulation scheme of received quality Q(k) is decided 8PSK, minus sign is added to the received quality and the modulation scheme is decided according to a sum of the received quality of individual bursts.

In the received quality measured in individual bursts, the received quality of 8PSK modulation scheme decided in the first burst (1st) of the first frame is shows "66" and is the highest, and is quite higher than the received quality of the GMSK modulation scheme decided in the other bursts. Therefore, the 8PSK modulation scheme decided in the first burst (1st) is decided as the first frame modulation scheme.

In a similar way, the received quality of the GMSK modulation scheme decided in the second burst (2nd) of the second frame is "55" and the highest value, followed by the received quality "34" of the 8PSK modulation scheme decided in the first burst (1st). In this case, although received quality of "55" of the GMSK modulation scheme decided in the second burst (2nd) is the highest value, the GMSK modulation scheme is not immediately decided as the second frame modulation scheme. The modulation schemes decided in individual bursts and the received quality of individual bursts are used and the modulation scheme with the highest received quality is adopted as the frame modulation scheme. In this case, estimating that received quality of GMSK in the third burst (3rd) is "15" and received quality of GMSK in the fourth burst (4th) is "6", the GMSK modulation scheme is decided as the second frame modulation scheme by comparing the sums of the received quality of the modulation schemes.

In an example of the prior art, the modulation scheme is decided according to a majority vote (that is, a majority vote using binary signals of "1" and "0") of the modulation scheme decided in four bursts, and as an example of the modulation scheme decision in the above first frame, the GMSK modulation scheme is decided as the modulation scheme of the first frame according to the majority vote. In this case, the modulation scheme decided based on the received data with high received quality (the decision information is high quality) is not considered as criteria. Therefore, the modulation scheme is decided based on low quality information obtained from the received data with low received quality (for example, in the case of poor receiving condition), and there is an error in the frame modulation scheme decision. That is, when received quality is low, a result of decision according to the majority vote is less reliable. In EDGE using HARQ, if an error occurs in the frame modulation scheme decision, a correct result cannot be obtained by combining demodulated received data by HARQ. As a result, the possibility of retransmission request becomes high and communication throughput is degraded.

By contrast, in the present embodiment, although three bursts (2nd, 3rd, 4th) are decided to employ GMSK modulation, the other burst (1st), which is decided to employ 8PSK modulation, has high quality, so that 8PSK modulation scheme is decided the first frame modulation scheme. Further, in the case of the burst modulation scheme decision of the second frame, the GMSK modulation scheme is decided as the second frame modulation scheme from the comparison of the received quality of bursts.

As described above, in the present embodiment, the received quality of each modulation scheme is measured, the correlation between individual bursts is checked, and the modulation scheme with the highest received quality is employed. In particular, the modulation scheme of a frame is decided from a sum of the received qualities of individual bursts. The method employs following (1) and (2).
(1) Amongst the four bursts, the likelihood output of a burst where the modulation scheme is decided wrong is set to be zero and nullified, and thereby the performance of Viterbi decoder for the received signal having likelihood in later stages can be improved.
(2) Only the received quality of the selected modulation scheme is left, and the frame modulation scheme is decided from the received quality of a plurality of bursts. According to the above processing, the same result as the case of replacing the received quality of the unselected modulation scheme by 0 is obtained. When the number of modulation schemes is two, it is possible to reduce the number of additions.

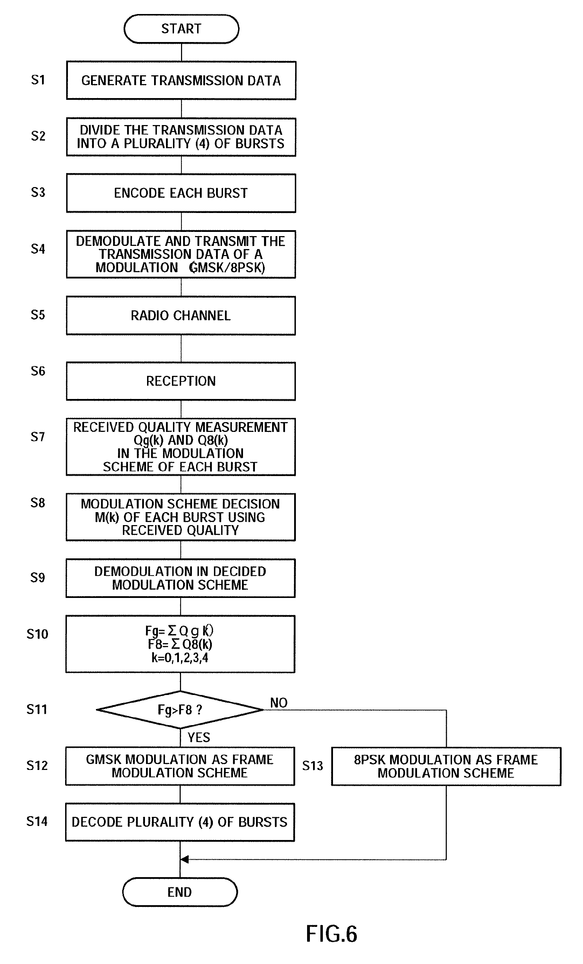

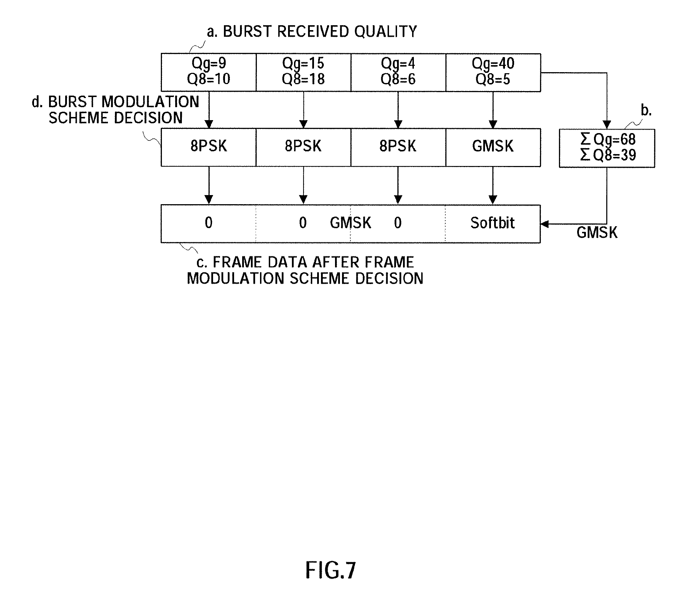

FIG.6 is a flowchart showing a frame modulation scheme deciding method. In FIG.6, "S" shows each step of the flowchart. Further, FIG.7 illustrates an example of the result of the frame modulation scheme decision.

A base station generates transmission data (step S1), divides the transmission data into a plurality (in this case, 4) of bursts (step S2), encodes each burst, demodulates the encoded data by a modulation scheme and transmits the demodulated data (step S3 and S4).

The transmission data is received in receiver 100 through radio channel (step S5). Receiver 100 receives the received data transmitted from the base station (step S6).

In step S7, received quality measuring apparatus 101 measures the received quality of each modulation scheme of bursts. When the received quality in the GMSK demodulation and 8PSK demodulation are set as Qg(k) and Q8(k) (K=0 , 1, 2, 3), as shown in FIG.7a, the received quality of bursts are, for example, (Qg=9, Q8=10) in the first frame, (Qg=15, Q8=18) in the second frame, (Qg=4, Q8=6) in the third frame and (Qg=40, Q8=5) in the fourth burst.

In step S8, burst modulation scheme deciding apparatus 103 decides the modulation scheme of each burst from the above received quality. M(k) shows the modulation scheme of each burst (K=0, 1, 2, 3), and in this case, M(k)=-1 shows 8PSK and M(k)=1 shows GMSK. Next, in step S9, demodulating apparatus 104 executes a demodulation in the decided modulation scheme.

In step S10 to S13, frame modulation scheme deciding apparatus 102 decides a frame modulation scheme from individual received quality measured in a plurality of bursts (four bursts in the case of GSM). That is, in step S10, frame modulation scheme deciding apparatus 102 sums up the received quality Qg(k) and Q8(k) of each modulation scheme of bursts, estimates the received quality evaluation, Fg and F8, of each modulation scheme and compares Fg with F8 in step S11. In the case of Fg greater than F8, frame modulation scheme deciding apparatus 102 decides that the received quality of the modulation scheme demodulated in the GMSK modulation scheme is higher than the received quality of the modulation scheme demodulated in the 8PSK modulation scheme, and decides the GMSK modulation scheme as the frame modulation scheme in step 12, and the flow proceeds to step 14. In the case of Fg equal to or less than F8, frame modulation scheme deciding apparatus 102 decides that the received quality in the 8PSK demodulation is higher than the received quality in the GMSK demodulation, and decides the 8PSK modulation scheme as the frame modulation scheme in step 13, and the flow proceeds to step 14.

In step S14, demodulating apparatus 104 demodulates the received data in the decided modulation scheme and the flow ends.

For example, in FIG.7a, a result of summing up the received quality of individual bursts configuring the frame is ΣQg=68 and ΣQ8=39, as shown in FIG.7b. The sum value of received quality of the GMSK modulation scheme, ΣQg(k), is higher than the sum value of received quality of the 8PSK modulation scheme, ΣQ8(k), and it is decided that the frame modulation scheme is demodulated in GMSK. According to the result of decision, when data is demodulated in the GMSK modulation scheme, the frame data after frame modulation scheme decision becomes as shown in FIG.7c, and a valid softbit is obtained in the GMSK modulation scheme,. As shown in FIG.7d, a result of the burst modulation scheme decision shows that the 8PSK modulation scheme is majority. In an example of the prior art, the 8PSK modulation scheme is decided as the frame modulation scheme that is majority in a majority vote, and so an error occurs in the frame modulation scheme decision. In the present embodiment, the frame modulation scheme can be decided correctly free of influence from an error in the modulation scheme decision in individual bursts.

As described above, according to the present embodiment, receiver 100 has modulation scheme deciding apparatus 106, the modulation scheme deciding apparatus 106 including received quality measuring apparatus 101 that measures received quality of received data in individual bursts, frame modulation scheme deciding apparatus 102 that decides a frame modulation scheme based on received qualities of a plurality of modulation schemes measured in individual bursts, and burst modulation scheme deciding apparatus 103 that decides the modulation scheme of each burst based on the received quality of received data. Frame modulation scheme deciding apparatus 102 decides a frame modulation scheme based on the received quality of a plurality of modulation schemes measured in individual bursts such that the overall received quality of the frame is the highest. The overall received quality of the frame is decided. Therefore, the frame modulation scheme can be decided correctly free of influence from an error of modulation scheme decision of individual bursts. The performance of the frame modulation scheme decision is improved, so that it is possible to improve throughput of receiver 100. A correct modulation scheme is used in demodulation, so that the reception performance in, especially, HARQ improves. It is thereby possible to reduce the number of retransmission requests, so that it is possible to realize an overall efficiency in system and contribute to lower communication cost and lower power consumption of communication device.

### (Embodiment 2)

The hardware configuration of the modulation scheme deciding apparatus of the present embodiment is the same as in FIG.2.

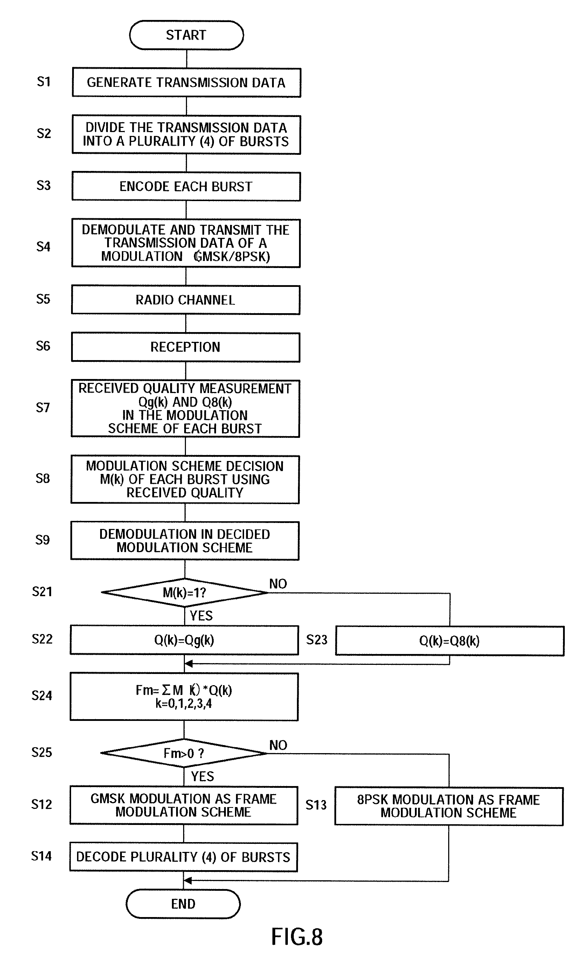

FIG. 8 is a flowchart showing the frame modulation scheme deciding method of a modulation scheme deciding apparatus according to the present embodiment 2. The same steps shown in FIG.2 are assigned the same reference numerals and detailed explanations thereof will be omitted.

In step S9, demodulating apparatus 104 executes demodulation in the decided modulation scheme, and decides whether or not the modulation scheme in each burst, M(k), is 1 in step S21. If M(k) is 1, in step S22, demodulating apparatus 104 decides the received quality of the GMSK modulation scheme, Qg(k), as the received quality of the burst, Q(k), and the flow proceeds to step S24. Further, if M(k) is not 1, in step S23, demodulating apparatus 104 decides the received quality of 8PSK, Q8(k), as the received quality of the burst, Q(k), and the flow proceeds to step S24.

In step S24, received quality evaluation value Fm is calculated by multiplying the modulation scheme of each burst, M(k), by the received quality of each burst, Q(k), and summing up the multiplied values. In step S25, whether or not Fm is greater than 0 (Fm greater than 0) is decided. If Fm is greater than 0, in step S12, the GMSK modulation scheme is decided as the above-described frame modulation scheme and the flow proceeds to step S14. If Fm is equal to or less than 0, in step S13, the 8PSK modulation scheme is decided as the above-described frame modulation scheme and the flow proceeds to step S14.

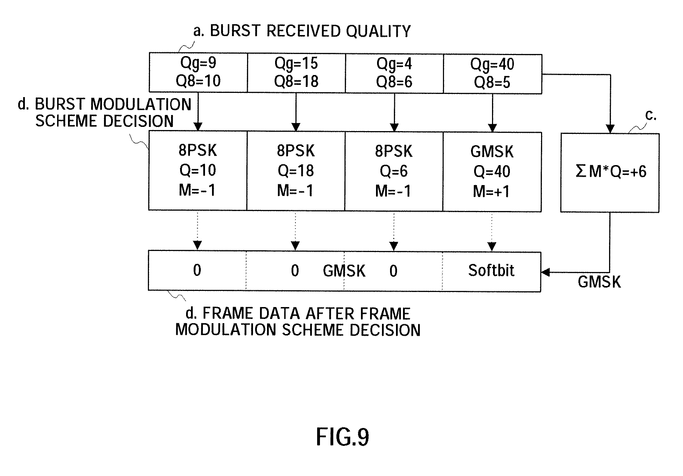

FIG. 9 illustrates an example of the result of a frame modulation scheme decision according to the flowchart in FIG.8.

For example, in FIG.9a, as a result of summing up the received quality of the individual bursts configuring the frame, the burst modulation scheme decision results shown in Fig.9b are obtained. As shown in FIG.9c, the received quality evaluation value Fm is calculated by multiplying the modulation scheme of each burst, M(k), by the received quality, Q(k), and summing up the multiplied values. If Fm is greater than 0, the GMSK modulation scheme is decided as the frame modulation scheme. According to the result of decision, when data is demodulated in the GMSK modulation scheme, the frame data after the frame modulation scheme decision is shown in FIG.9d., and according to FIG.9d,valid softbit can be obtained in the GMSK modulation scheme.

Therefore, according to the present embodiment, as the case of embodiment 1, a frame modulation scheme can be decided correctly free of influence from an error in the modulation scheme decision in each burst.

### (Embodiment 3)

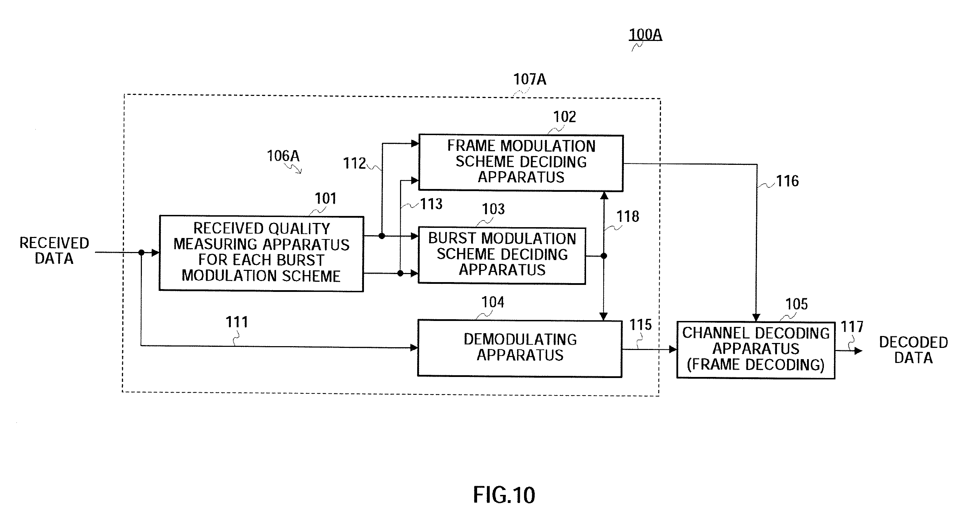

FIG.10 is a block diagram showing a configuration of a receiver having a modulation scheme deciding apparatus according to Embodiment 3 of the present invention. The same components explained in FIG.2 are assigned the same reference numerals and detailed explanations thereof will be omitted.

In FIG. 10, receiver 100A having a modulation scheme deciding apparatus includes received quality measuring apparatus 101, frame modulation scheme deciding apparatus 102, burst modulation scheme deciding apparatus 103, demodulating apparatus 104 and channel decoding apparatus 105.

Received quality measuring apparatus 101, frame modulation scheme deciding apparatus 103 and burst modulation scheme deciding apparatus 103 configure modulation scheme deciding apparatus 106A. Modulation scheme deciding apparatus 106A and demodulating apparatus 104 configure frame demodulating apparatus 107A as a whole.

Burst modulation scheme deciding apparatus 103 decides the modulation scheme of each burst and outputs modulation scheme identifying signal 118 indicative of the result of decision to modulation scheme deciding apparatus 102 and demodulating apparatus 104.

In the case of deciding the frame modulation scheme based on burst modulation scheme identifying signal 118, frame modulation scheme deciding apparatus 102 decides the frame modulation scheme by masking the received quality of the unchosen modulation scheme. The result of this masking process is the same as the result of replacing the unselected received quality by 0. The masking process can make a process simpler and reduce the number of additions compared to the decision method in FIG.2.

### (Embodiment 4)

The present embodiment is an example of applying a frame modulation scheme deciding method using likelihood.

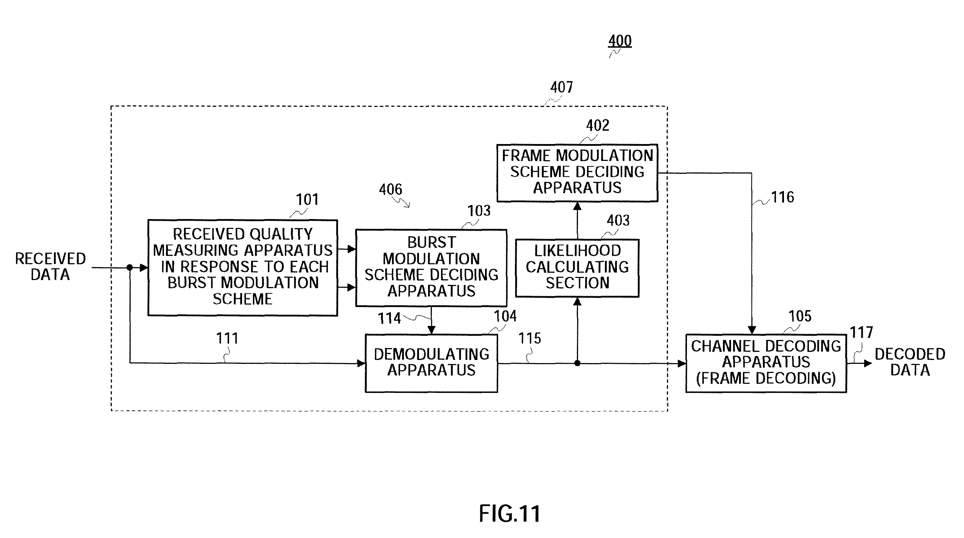

FIG.11 is a block diagram showing a configuration of a receiver having a modulation scheme deciding apparatus according to Embodiment 4 of the present invention. The same components explained in FIG.2 are assigned the same reference numerals and detailed explanations thereof will be omitted.

In FIG.11, receiver 400 having a modulation scheme deciding apparatus 400 includes received quality measuring apparatus 101, frame modulation scheme deciding apparatus 402, burst modulation scheme apparatus 103, demodulating apparatus 104, likelihood calculating section 403 and channel decoding apparatus 105.

Received quality measuring apparatus 101, frame modulation scheme apparatus 402, burst modulation scheme apparatus 103 and likelihood calculating section 403 configure modulation scheme deciding apparatus 406. Modulation scheme deciding apparatus 406 and demodulating apparatus 104 configure frame demodulating apparatus 407 as a whole.

Likelihood calculating section 403 calculates the integral of the absolute values of the likelihood of each burst, Σ | Softbit(i) | (i is the symbol number), and outputs the result to frame modulation scheme deciding apparatus 402. Bit likelihood is related to bit error rate characteristics, and the bit error rate characteristics are related to received quality, so that it is also possible to decide the frame modulation scheme using likelihood.

Frame modulation scheme deciding apparatus 402 decides the frame modulation scheme using the calculated likelihood in each burst as the correlation values of the received quality of a plurality of modulation schemes measured in individual bursts.

Therefore, according to the present embodiment, as the case of Embodiment 1 of the present invention, frame modulation scheme can be decided correctly free of an influence from an error in the modulation scheme decision in each burst.

Radio communication apparatus calculates likelihood to decide whether or not there is a transmission error in soft output decoding apparatuses such as Viterbi decoding apparatus and Turbo decoding apparatus. The present embodiment executes a frame modulation scheme decision using a known likelihood value so that it is expected to execute the embodiment easily without enlarging circuit scale.

The above explanation is an example of showing the preferred embodiment of the present invention and the scope of the present invention is not limited to the above embodiments.

Further, in the present embodiment, although "modulation scheme deciding apparatus" and "modulation scheme deciding method" are used for title of invention for ease of explanation, "modulation scheme identifying circuit", "modulation scheme identifying method", or "modulation scheme identifying communication apparatus" can be used for the title.

Further, kinds, the number or connection methods of each circuit section configuring the above receiver such as received quality measuring apparatus and demodulating apparatus, and furthermore, the modulation scheme are not limited to the above described embodiments. For example, frame modulation scheme deciding apparatus 102 and burst modulating deciding apparatus 103 may configure a modulation scheme deciding apparatus circuit, and received quality measuring apparatus 101, frame modulation scheme deciding apparatus 102 or burst modulation scheme deciding apparatus 103 may be incorporated into demodulating apparatus 104.

The modulation scheme deciding method described above is executed in program to work the modulation scheme deciding method. The program is stored in a computer-readable record media.

As described above, according to the present invention, it is possible to reduce the number of errors in frame modulation scheme decision and execute a demodulation in a correct modulation scheme. As a result, it is possible to improve the performance of receiver and reduce the number of retransmission requests, so that it is possible to realize the overall efficiency in the system.

Therefore, the modulation scheme deciding apparatus and modulation scheme deciding method according to the present invention are used as a part of receiving process in cellular phones for mobile communication. Especially, in the GSM scheme used in Europe mainly and the EDGE (Enhanced Data GSM Environment) scheme, which is a third generation version of GSM, it is possible to reduce throughput and circuit scale of the above equalization process, and contribute to realize a low cost cellular phones and extend the time length of standby time and duration of call.

## Claims

1. Amodulation scheme deciding apparatus, comprising:
a received quality measuring section that measures received quality of received data, the data being transmitted in a plurality of bursts dividing a frame and being subjected to the received quality measurement on a per burst basis;
a frame modulation scheme deciding section that decides a modulation scheme of the frame based on received quality of a plurality of modulation schemes measured in each burst; and
a burst modulation scheme deciding section that decides a modulation scheme of each burst based on the received quality of the received data.

2. The modulation scheme deciding apparatus according to claim 1, wherein the received quality measuring section measures the received quality from a bit error rate, a signal to noise ratio and an input power level at an antenna terminal.

3. The modulation scheme deciding apparatus according to claim 1, wherein the received quality measuring section measures the received quality from a known signal or a training sequence code included in the received data.

4. The modulation scheme deciding apparatus according to claim 1, wherein the received quality measuring section measures the received quality from an absolute value of a soft decision value of data demodulated from the received data.

5. The modulation scheme deciding apparatus according to claim 1, wherein the burst modulation scheme deciding section decides the modulation scheme of each burst from a plurality of modulation schemes based on the received quality of the received data.

6. The modulation scheme deciding apparatus according to claim 1, wherein the frame scheme deciding section decides a modulation scheme that maximizes overall received quality of the frame as the modulation scheme of the frame, based on the received quality of the plurality of modulation schemes measured in each burst.

7. The modulation scheme deciding apparatus according to claim 1, wherein the frame modulation scheme deciding section finds a total of the received quality of the plurality of modulation schemes measured in each burst and decides a modulation scheme having a high total value as the modulation scheme of the frame.

8. The modulation scheme deciding apparatus according to claim 1, wherein the frame modulation scheme deciding section makes a cross comparison between the received quality of the plurality of modulation schemes measured in each burst, finds a total of received quality of a modulation scheme of high received quality, and decides a modulation scheme having a high total value as the modulation scheme of the frame.

9. A receiving apparatus, comprising:
a received quality measuring section that measures received quality of received data, the data being transmitted in a plurality of bursts dividing a frame and being subjected to the received quality measurement on a per burst basis;
a frame modulation scheme deciding section that decides a modulation scheme of the frame based on received quality of a plurality of modulation schemes measured in each burst; and
a burst modulation scheme deciding section that decides a modulation scheme of each burst based on the received quality of the received data;
a demodulating section that demodulates the received data based on the modulation scheme decided in the burst modulation scheme deciding section; and
a channel decoding section that executes channel decoding based on the modulation scheme of the frame decided in the frame modulation scheme deciding section.

10. The receiving apparatus according to claim 9, wherein the received quality measuring section measures the received quality from a bit error rate, a signal to noise ratio and an input power level at an antenna terminal.

11. The receiving apparatus according to claim 9, wherein the received quality measuring section measures the received quality from a known signal or a training sequence code included in the received data.

12. The receiving apparatus according to claim 9, wherein the received quality measuring section measures the received quality from an absolute value of a soft decision value of data demodulated from the received data.

13. The receiving apparatus according to claim 9, wherein the burst modulation scheme deciding section decides the modulation scheme of each burst from a plurality of modulation schemes based on the received quality of the received data.

14. The receiving apparatus according to claim 9, wherein the frame scheme deciding section decides a modulation scheme that maximizes overall received quality of the frame as the modulation scheme of the frame, based on the received quality of the plurality of modulation schemes measured in each burst.

15. The receiving apparatus according to claim 9, wherein the frame modulation scheme deciding section finds a total of on the received quality of the plurality of modulation schemes measured in each burst and decides a modulation scheme having a high total value as the modulation scheme of the frame.

16. The receiving apparatus according to claim 9, wherein the frame modulation scheme deciding section makes a cross comparison between the received quality of the plurality of modulation schemes measured in each burst, finds a total of received quality of a modulation scheme of high received quality, and decides a modulation scheme having a high total value as the modulation scheme of the frame.

17. A modulation scheme deciding method comprising the steps of:
measuring received quality of received data, the data being transmitted in a plurality of bursts dividing a frame and being subjected to the received quality measurement on a per burst basis;
deciding a modulation scheme of the frame based on received quality of a plurality of modulation schemes measured in each burst; and
deciding a modulation scheme of each burst based on the received quality of the received data.

18. The modulation scheme deciding section, further comprising the steps of:
demodulating the received data based on the modulation scheme decided; and
executing channel decoding based on the modulation scheme of the frame decided.

19. A program making computer execute the steps of:
measuring received quality of received data, the data being transmitted in a plurality of bursts dividing a frame and being subjected to the received quality measurement on a per burst basis;
deciding a modulation scheme of the frame based on received quality of a plurality of modulation schemes measured in each burst; and
deciding a modulation scheme of each burst based on the received quality of the received data.
